# EUROPÄISCHE PATENTSCHRIFT

(11) **EP 2 450 325 B1**
(45) Veröffentlichungstag und Bekanntmachung des Hinweises auf die Patenterteilung: **06.09.2017**
(21) Anmeldenummer: 10190428.2
(22) Anmeldetag: 09.11.2010
(51) Int. Cl.: C04B 28/26, C21C 1/10

(54) **Verfahren zur Herstellung eines Formimpflings**
Method for manufacturing a molding inoculant
Procédé de fabrication d'une ébauche de formage d'inoculation

(43) Veröffentlichungstag der Anmeldung: 09.05.2012
(73) Patentinhaber: Kutsch, Thorsten, 46539 Dinslaken (DE); Hartmann, Denis, 41564 Kaarst (DE)
(72) Erfinder: Kutsch, Thorsten, 46539 Dinslaken (DE); Kordt, Christian, 40822 Mettmann (DE); Hartmann, Denis, 40699 Erkrath (DE)
(74) Vertreter: Kalkoff & Partner

(56) Entgegenhaltungen:
- WO-A1-99/29911
- GB-A- 1 132 055
- US-A- 3 658 115
- US-A- 3 851 700
- Eun-Hee Kim, Je-Hyun Lee, Yeon-l Jung: "Dual coating process for a high funtional reinforcement phase in metal matrix composites", Progress in Organic Coatings, 22. Dezember 2010 (2010-12-22), Seiten 1-6, XP002628151, Gefunden im Internet: URL:http://www.sciencedirect.com/science?_ ob=MImg&_imagekey=B6THD-51S6FS0-3-9&_cdi=5 280&_user=987766&_pii=S0300944010003309&_o rigin=gateway&_coverDate=12%2F22%2F2010&_s k=999999999&view=c&wchp=dGLzVtz-zSkWA&md5= 2cbf5f60882e864557abe16aff1d6a3f&ie=/sdart icle.pdf [gefunden am 2011-03-14]
- ROBERTS M: "Use of organic ester hardeners in selflrardeningsodium-silicate-bonded sands", FOUNDRY TRADE JOURNAL, Bd. 133, 28. Dezember 1972 (1972-12-28), Seiten 783-786, XP008134332, INSTITUTE OF CAST METALS ENGINEERS, WEST BROMWICH, GB ISSN: 0015-9042

## Beschreibung

Die Erfindung betrifft ein Verfahren zur Herstellung eines Formimpflings gemäß Oberbegriff des Anspruchs 1.

Formimpflinge und Verfahren zu deren Herstellung sind bekannt, beispielsweise aus den Druckschriften US 3 851 700 A, US 3 658 115 A, GB 1132 055 A oder WO 99/29911 A1. Es handelt sich bei Formimpflingen um geometrisch bestimmte Körper, die ein Impfmittel umfassen und beim Gießen zur Beeinflussung der Gefügeausbildung von Metallen in das Gießystem eingebracht werden. Das Impfmittel bewirkt eine Erhöhung der Zahl der Kristallisationskeime in der Schmelze und damit eine Vermehrung der eutektischen Körner beim Erstarren, so dass eine Unterkühlung unter die metastabile Gleichgewichtstemperatur vermieden wird. Insbesondere bildet das Impfmittel Kristallisationskeime für Graphit, bevorzugt Kugelgraphit. Üblicherweise wird der Formimpfling so in das Gießsystem eingebracht, dass das zu vergießende Metall diesen umströmt und das Impfmittel auflöst. Erwünscht ist eine möglichst gleichmäßige Auflösung des Impflings über den Verlauf des Prozesses, um die Keimzahl über das gesamte vergossene Volumen konstant zu halten. Bei einem ersten Verfahren zur Herstellung von Formimpflingen wird das Impfmittel im Induktionsofen erschmolzen und anschließend in Formen gegossen. Dies ist aufwändig, insbesondere weil sich das Impfmittel sehr schlecht vergießen lässt. Gegossene Formimpflinge zeigen ein Auflöseverhalten, bei dem die Impfwirkung zu Beginn des Gießprozesses stark zunimmt, recht früh ein Maximum durchläuft und danach rasch abfällt. Dies kann dazu führen, dass zu Beginn des Prozesses eine große Keimzahl erreicht wird, während sie zum

Ende des Prozesses gering ist. Jedenfalls variiert die Keimzahl über den Verlauf des Prozesses und damit auch über das vergossene Volumen stark. Ein zweites Verfahren sieht vor, das Impfmittel in Pulverform mit hohem Druck in Formen zu pressen. Anschließend werden die Presslinge in einem Ofen gesintert. Hierbei können keine beliebigen Zusammensetzungen des Impfmittels realisiert werden, weil die Pulverkörner nur bei bestimmten Zusammensetzungen miteinander versintern. Gesinterte Formimpflinge zeigen ein Auflöseverhalten, bei dem die Impfwirkung zunächst langsam ansteigt, ein Maximum durchläuft und dann langsam abfällt. Auch in diesem Fall erhält man keine konstante Keimzahl über den gesamten Gießprozess. Schließlich sind auch Verfahren bekannt, bei denen organische Bindemittel eingesetzt werden, um die Pulverkörner miteinander zu verbinden und geometrisch bestimmte Formimpflinge zu realisieren. Bei der Verwendung des Formimpflings im Gießprozess bilden die organischen Bindemittel in Kontakt mit der Schmelze allerdings Kohlenstoff-Phasen, es wird also Kohlenstoff abgeschieden, wodurch sich der Impfling gegen das weitere Aufschmelzen schützt. Sein Auflöseverhalten wird dabei sehr verschlechtert.

Aufgabe der Erfindung ist es, ein einfaches und wirtschaftliches Verfahren zur Herstellung von Formimpflingen zu schaffen, die ein möglichst homogenes Auflösungsverhalten über den gesamten Gießprozess zeigen, und bei denen darüber hinaus ein weiter Bereich von Zusammensetzungen realisierbar ist.

Diese Aufgabe wird gelöst, indem ein Verfahren mit den Schritten des Anspruchs 1 angegeben wird. Zunächst wird ein Impfmittelpulver gemischt. Dabei spricht der Begriff "Mischen eines Impfmittelpulvers" die Zusammenstellung beziehungsweise Auswahl der Analyse des Pulvers an. Dies bedeutet, dass festgelegt wird, welchen Anteil an Trägermaterial und wirksamen Bestandteilen das Impfmittelpulver umfasst. Das Verfahren umfasst auch den Fall, dass ein Standard-Impfmittel beziehungsweise Impfmittelpulver mit einer vorgegebenen Analyse ausgewählt und verwendet wird. Es wird ein Bindemittel zugegeben. Schließlich wird die vollständige Mischung zu einem Formimpfling gepresst. Das Verfahren zeichnet sich dadurch aus, dass ein anorganisches Bindemittel verwendet wird. Es ist hierdurch möglich, die Bildung von Kohlenstoff-Phasen während des Gießprozesses vollständig zu vermeiden. Der mithilfe des Verfahrens hergestellte Formimpfling zeigt ein optimales Auflöseverhalten. Der technisch aufwändige und teure Prozess des Gießens des Formimpflings entfällt. Da die Pulverkörner durch das anorganische Bindemittel unter Wirkung des Pressdrucks verbunden werden, entfällt auch ein Sintern des Impflings. Daher sind nahezu beliebige Zusammensetzungen beziehungsweise Analysen des Impfmittels in dem Formimpfling realisierbar.

Bei dem erfindungsgemäßen Verfahren wird eine ofenfreie Trocknung des Formimpflings vorgenommen. Bei den Kondensationsreaktionen, denen anorganische Bindemittel typischerweise unterliegen, wird in der Regel Wasser oder eine andere, unter Normalbedingungen flüssige Substanz freigesetzt. Es ist daher zu erwarten, dass ein mithilfe eines anorganischen Bindemittels hergestellter Formimpfling im Anschluss an das Pressen in einem Ofen getrocknet werden muss, um das Nebenprodukt der Kondensationsreaktion zu entfernen und die Festigkeit des Impflings so zu erhöhen, dass dieser für den Gießprozess brauchbar wird. Anstelle dieses zusätzlichen, aufwändigen und teuren Schritts wird bei dem hier angegebenen Verfahren eine ofenfreie Trocknung vorgenommen.

Erfindungsgemäß werden die Pressbedingungen, insbesondere der Pressdruck, so gewählt, dass die beim Pressen erzeugte Wärme ausreicht, um die infolge der Kondensationsreaktion abgespaltene Substanz in hinreichender Menge zu verdampfen, also den Formimpfling hinreichend zu trocknen. Die Wärme die zur Trocknung dient entsteht zum einen durch den Pressvorgang selbst und zum andern durch die unter dem hohen Druck beschleunigte ablaufende chemische Reaktion. Alternativ oder zusätzlich kann ein Bindemittel gewählt werden, welches eine niedrig siedende Substanz abspaltet, die bereits bei geringerer Wärmeentwicklung, oder bei gleicher Wärmeentwicklung entsprechend schneller verdampft. Jedenfalls erhält man unter solchen Bedingungen einen Formimpfling, der bereits nach dem Pressen hinreichend fest, stabil und handhabbar ist, so dass er nicht in einem Ofen getrocknet oder nach verfestigt werden muss.

Bei einer erfindungsgemäßen Ausführung des Verfahrens kommt als Bindemittel Wasserglas zum Einsatz. Wasserglas bezeichnet vernetzte, typischerweise wasserhaltige Silikate, die insbesondere unter Einwirkung des Pressdrucks beziehungsweise der beim Pressen freiwerdenden Wärme weiter vernetzen können. So entsteht ein dreidimensionales Netzwerk, das den Impfling durchsetzt und zusammenhält.

Weiterhin wird ein Verfahren bevorzugt, bei dem als Bindemittel Natrium- und/oder Kaliumsilikat verwendet wird. Hierbei kann es sich um spezielle Wassergläser handeln oder auch um kürzerkettige Silikate mit gegebenenfalls geringem oder verschwindendem Wassergehalt. Auch diese bilden unter Einwirkung des Pressdrucks und der Wärmeentwicklung ein dreidimensional verzweigtes Silikat-Netzwerk, welches den Formimpfling zusammenhält.

Erfindungsgemäß ist ein Verfahren, bei dem mindestens ein Kieselsäureester als Bindemittel verwendet wird. Dieser wird insbesondere in Hinblick auf die Trocknung des Formimpflings ausgewählt. Ein Kieselsäureester ist ein Reaktionsprodukt der Kieselsäure mit mindestens einem Alkohol. Es ist möglich, Veresterungsprodukte der Kieselsäure mit verschiedenen Alkoholen allein oder in Kombination miteinander zu verwenden. Bei der Kondensationsreaktion von Kieselsäureestern zu einem dreidimensionalen Silikatnetzwerk wird kein Wasser abgespalten, sondern es wird der mit der Kieselsäure veresterte Alkohol freigesetzt. Es kann sich hierbei beispielsweise um Methanol, Ethanol oder Propanol, zum Beispiel Isopropanol, aber auch um andere Alkohole handeln. Bevorzugt wird - insbesondere in Hinblick auf die Trocknung des Formimpflings - mindestens ein Alkohol ausgewählt, dessen Siedepunkt möglichst niedrig, insbesondere niedriger als der Siedepunkt von Wasser liegt. In diesem Fall verdampft beim Pressen des Formimpflings bereits ein größerer Anteil des Spaltprodukts als dies beim Einsatz eines wasserabspaltenden Bindemittels der Fall ist. Dadurch ist die Trocknung des Formimpflings bereits beim Pressen sehr effizient. Es wird so bevorzugt eine ofenfreie Trocknung verwirklicht. Da die Wärme die zur Trocknung dient im Pressvorgang erzeugt wird sowie durch die unter hohem Druck beschleunigte chemische Reaktion.

Bei dem erfindungsgemäßen Verfahren wird eine Presstrocknung des Formimpflings vorgenommen. Dies spricht an, dass die Pressbedingungen, insbesondere der Pressdruck, so gewählt sind, dass die beim Pressen erzeugte Wärme ausreicht, um den Formimpfling hinreichend zu trocknen. Auf diese Weise wird erfindungsgemäß eine ofenfreie Trocknung realisiert.

Eine Ausführung des erfindungsgemäßen Verfahren zeichnet sich dadurch aus, dass zum Pressen des Formimpflings eine doppelseitig wirkende Presse verwendet wird. Es hat sich gezeigt, dass insbesondere auf Ferrosilizium basierende Impfmittelpulver sehr kantig sind und sich schlecht verpressen lassen. In einer einseitig wirkenden Presse wird der Impfling auf der Seite des aktiven Stempels stark komprimiert, auf der gegenüberliegenden Seite, auf der das relativ zur Presse unbewegliche Widerlager angeordnet ist, bleibt er jedoch eher bröselig. Insbesondere im Bereich seiner am Widerlager angeordneten umlaufenden Kante ist die Verdichtung des Impflings mangelhaft. Auch die Wärmeentwicklung ist auf der Seite des Widerlagers geringer. Dies hat zur Folge, dass die Kompaktierung des Formimpflings nicht gleichmäßig ist. Dies bedeutet, dass dessen Dichte nicht über den gesamten Querschnitt und die gesamte Höhe konstant ist, was ein über den Gießprozess variierendes Auflöseverhalten und damit eine variierende Keimzahl zur Folge hat. Es wird auch keine über das Volumen des Impflings homogen verlaufende Kondensationsreaktion erzielt. Durch die inhomogene Wärmeentwicklung beim Pressen wird der auf der Seite des Widerlagers angeordnete Teil darüber hinaus nicht effizient getrocknet. Daher ist hier gegebenenfalls eine Trocknung in einem Ofen nötig. Eine doppelseitig wirkende Presse umfasst zwei Pressstempel, die sich beim Pressen aufeinander zu bewegen. Dies führt zu einer homogenen Verdichtung des Presslings, der so eine gleichmäßige Kompaktierung, also eine gleichmäßige Verteilung der Festigkeit aufweist. Zugleich wird eine homogene Erwärmung über sein gesamtes Volumen bewirkt, so dass letztlich auch die Kondensationreaktion über das gesamte Volumen homogen abläuft. Zugleich wird eine homogene Verdampfung des bei der Kondensationsreaktion abgespaltenen Produkts bewirkt. Eine Trocknung im Ofen kann dann entfallen. Es wird demnach bevorzugt eine ofenfreie Trocknung, insbesondere eine Presstrocknung vorgenommen. Es zeigt sich auch, dass die Wärmeentwicklung beim Pressen mit einer doppelseitig wirkenden Presse insgesamt größer ist als bei einer einseitig wirkenden Presse. Dies führt wiederum zu einer besseren Trocknung und einem rascheren Verlauf der Kondensationsreaktion. Der Formimpfling ist daher nach dem Pressen bereits fester und stabiler.

Bei dem erfindungsgemäßen Verfahren werden zwischen 0,5 bis 9 %, vorzugsweise 1 bis 7 %, besonders bevorzugt 3 % Bindemittel zu dem Impfmittelpulver zugegeben werden. Hierbei sind Gewichtsprozente angesprochen. Es zeigt sich damit, dass nur eine geringe Bindemittelkonzentration erforderlich ist, um das Verfahren zu realisieren.

Bevorzugt wird auch ein Verfahren, bei dem das Impfmittelpulver Ferrosilizium umfasst. Dieses Material ist besonders vorteilhaft in Zusammenhang mit dem Einsatz eines anorganischen Bindemittels auf Silikatbasis, weil sich so Si-O-Si-Brücken zwischen den Pulverkörnern des Impfmittels ausbilden, die zu einer festen Verbindung innerhalb des Formimpflings führen. Hierbei wird ein Spaltprodukt, insbesondere Wasser oder ein Alkohol, abgespalten, welches durch die Wärmeentwicklung beim Pressen in solchem Maß verdampft werden kann, dass sich eine anschließende Trocknung des Impflings in einem Ofen erübrigt. Letztlich resultiert ein dreidimensionales Silikatnetzwerk, welches den gesamten Formimpfling durchsetzt und diesen fest zusammenhält.

Schließlich wird ein Verfahren bevorzugt, bei dem das Impfmittelpulver mindestens eine Beimengung aus der Gruppe von Kalzium, Aluminium, Mangan, Zirkonium, Barium, Magnesium, Titan, Lutetium,
Cer, Kohlenstoff, insbesondere Graphit, Bismut, Strontium, Schwefel und/oder mindestens einem Seltenerdelement umfasst. Diese Komponenten können mithilfe des Verfahrens allein oder in beliebiger Kombination mit nahezu beliebigem Anteil dem Impfmittelpulver zugegeben werden. Das Impfmittelpulver kann also mit nahezu beliebiger Analyse hergestellt werden.

Ein gemäß dem Verfahren nach einem der Ansprüche 1 bis 8 hergestellter Formimpfling zeichnet sich dadurch aus, dass er ein Impfmittel und ein anorganisches Bindemittel umfasst. Aufgrund des anorganischen Bindemittels ist es möglich, den Formimpfling durch Pressen wirtschaftlich und einfach herzustellen. Dabei kann eine nahezu beliebige Zusammensetzung beziehungsweise Analyse des Impfmittelpulvers verwirklicht werden.

Bevorzugt wird ein Formimpfling, der eine äußerst gleichmäßige Kompaktierung aufweist. Dies bedeutet, dass seine Dichte über den gesamten Querschnitt und die gesamte Höhe äußerst gleichmäßig und homogen ist. Dadurch zeigt der Formimpfling ein optimales Auflöseverhalten, wobei die Keimzahl über den gesamten Gießprozess sehr konstant ist. Außerdem wird eine außerordentlich gute Impfwirkung erzielt.

Das Verfahren und der Formimpfling werden im Folgenden näher erläutert.

Zur Herstellung des Impflings wird zunächst ein Impfmittelpulver gemischt, was bedeutet, dass die Analyse des Pulvers festgelegt wird. Als Trägermaterial kann beispielsweise Ferrosilizium verwendet werden, wobei hier ebenfalls der Eisen- und Siliziumanteil variabel ist.

Bei dem Verfahren ist es möglich, beliebige, auf Si-Basis hergestellte, körnige Impfmittel zu verwenden. Das Verfahren ist allerdings nicht hierauf beschränkt.

Als aktive Substanzen kommen vorzugsweise Kalzium, Aluminium, Mangan, Zirkonium, Barium, Magnesium, Titan, Aluminium, Lutetium, Cer, Kohlenstoff, insbesondere Graphit, Bismut, Strontium, Schwefel und/oder mindestens ein Seltenerdelement infrage. Diese aktiven Elemente können in nahezu beliebiger Auswahl und in nahezu beliebigem Anteil dem Impfmittelpulver zugesetzt werden.

Das Impfmittel kann in situ gemischt werden. Es ist aber auch möglich, ein vorgefertigtes Standard-Impfmittel auszuwählen. Insbesondere ist es möglich, verschiedene Standard-Impfmittel zu mischen. Diese können auch mit mindestens einer zusätzlichen Beimengung versetzt werden.

Es wird ein Bindemittel zugegeben. Es ist möglich, zunächst die Analyse des Impfmittelpulvers festzulegen und anschließend das Bindemittel zuzugeben. Das Bindemittel kann jedoch auch zugleich mit den anderen Beimengungen zugemischt werden. Schließlich ist es auch möglich, das Bindemittel vorzulegen und anschließend die anderen Komponenten zuzugeben. Das aus Impfmittelpulver und Bindemittel bestehende Pulver wird vorzugsweise vermischt und homogenisiert.

Anschließend wird das zu verpressende Pulver, welches das Impfmittel und das Bindemittel umfasst, in eine Presse dosiert. Bevorzugt wird eine Brikettierpresse verwendet, die besonders bevorzugt beidseitig wirkend ist.

Es ist möglich, eine Presse zu verwenden, in deren Bereich eine Mischvorrichtung angeordnet ist, in welcher das zu verpressende Pulver unmittelbar vor dem Pressvorgang gemischt wird. Die Mischvorrichtung kann bevorzugt über der Presse angeordnet sein. Das Impfmittelpulver wird vorzugsweise unmittelbar vor dem Pressen mit dem Bindemittel gemischt und, bevorzugt mithilfe einer Waage, in die Presse dosiert. Dies hat den Vorteil, dass das Pulver nicht altern kann, bevor es verpresst wird. Die Kondensationsreaktion zwischen den Impfmittelpulverkörnern und dem Bindemittel läuft nämlich typischerweise bereits unter Normalbedingungen ab, so dass es bei einer längeren Lagerung des Pulvers zu einer gewissen Aushärtung kommt. In diesem Fall kann beim Pressen gegebenenfalls keine gleichmäßige Kompaktierung mehr gewährleistet werden.

In der Presse wird das Pulver für wenige Sekunden, insbesondere für 2 bis 3 s gepresst. Bevorzugt dauert ein Presszyklus ungefähr 6 Sekunden, so dass circa 10 Presslinge pro Minute hergestellt werden können.

Es wird ein spezifischer Druck 50 bis 500 N/mm² für die Pressung verwendet. Besonders bevorzugt beträgt der spezifische Pressdruck 150 bis 250 N/mm², ganz besonders bevorzugt 190 N/mm².

Beim Pressen steigt die Temperatur des Presslings auf circa 50 °C an. Dabei läuft die Kondensationsreaktion beschleunigt ab, und das freiwerdende Spaltprodukt verdampft. Nach dem Pressvorgang wird der bereits hinreichend ausgehärtete Pressling beziehungsweise Formimpfling der Presse entnommen.

Die Formimpflinge sind dann sofort verwendbar. Sie werden jedoch bevorzugt zumindest zwischen 2 bis 3 Stunden gelagert, weil in diesem Zeitraum ein großer Festigkeitszuwachs erfolgt. Die Festigkeit steigt insbesondere in den ersten 30 Minuten bis einen Stunde nach dem Pressen nochmals stark an. Vorzugsweise werden die Formimpflinge noch etwa 24 Stunden gelagert, bevor sie im Gießprozess verwendet werden. Sie sind allerdings deutlich länger lagerbar und können beispielsweise mehrere Wochen oder auch länger gelagert werden, ohne dass anschließend eine schlechtere Impfwirkung feststellbar ist.

Die Festigkeit der mit dem Verfahren hergestellten Formimpflinge ist der von gesinterten Formimpflingen vergleichbar, damit also geringer als die Festigkeit gegossener Formimpflinge. Sie zeichnen sich durch eine lange Lagerfähigkeit aus.

Es hat sich gezeigt, dass die Zahl der in einem Schnitt durch das fertige Gußteil pro Flächeneinheit vorhandenen Graphitkugeln, die sogenannte Kugelzahl - angegeben in 1/mm² - , mit der Zahl der beim Gießprozess zugegebenen Impfpartikel zunimmt. Insbesondere nimmt bei gegebenem Impfmittel, sowie gegebener Größe und Dichte des Formimpflings die Kugelzahl mit abnehmender Korngröße des Impfmittelpulvers, also mit steigender Kornzahl, zu. Generell ist eine hohe Kugelzahl erwünscht. Demnach sollte das Pulver möglichst feinkörnig sein. Um dies zu erreichen ist es bekannt, das Impfmittelpulver vor der Weiterverarbeitung zu Zerkleinern.

Bei dem vorliegenden Verfahren ist eine Zerkleinerung des Impfmittelpulvers nicht nötig, weil sich beim Pressen des Formimpflings von selbst eine Zerkleinerung ergibt. Insbesondere bei Verwendung einer doppelseitig wirkenden Presse ist es möglich, die mittlere Korngröße um die Hälfte bis hin zu einem Drittel zu verringern. Es findet demnach bevorzugt eine Presszerkleinerung beziehungsweise in-situ-Kornfeinung statt. Dieser Effekt tritt insbesondere auch bei Verwendung normaler Standard-Impfmittel auf. Damit sind mit den durch das Verfahren hergestellten Formimpflingen Kugelzahlen von 300 bis 400/mm², sogar 450/mm² und darüber hinaus ohne weiteres erreichbar. Diese Werte werden bei der Verwendung von Standard-Impfmitteln in herkömmlichen Prozessen typischerweise nicht erreicht.

Mithilfe des vorliegenden Verfahrens kann ein Formimpfling quasi in einem Schritt hergestellt werden: Es genügt, das zu verpressende Pulver zu einem Formimpfling zu pressen. Weder ist es nötig, das Pulver zuvor zu zerkleinern, noch muss der Impfling nach dem Pressen eigens getrocknet werden. Hierdurch ist das Verfahren sehr wirtschaftlich und einfach durchzuführen.

Da die zu verpressende Mischung vorzugsweise in kleinen Portionen angesetzt wird, welche direkt verarbeitet werden, ist eine schnelle Anpassung der Analyse an geänderte Anforderungen der Gießerei ohne weiteres möglich. Dies ist ein großer Vorteil im Vergleich zu gegossenen oder gesinterten Formimpflingen, bei denen es sich im wesentlichen um Standardteile handelt, deren Produktionsprozess nur schwer auf eine geänderte Analyse einstellbar ist, und die typischerweise im Tonnenmaßstab hergestellt werden.

Mit dem hier angegebenen Verfahren kann - abhängig von der Größe der verwendeten Presse - beispielsweise alle 5 kg des zu verpressenden Pulvers die Analyse geändert werden. Dabei sind Losgrößen von mehreren Kilogramm bis mehreren Tonnen mit beliebiger Analyse herstellbar. Die gepressten Formimpflinge können mehrere Gramm bis mehrere Kilogramm schwer sein.

Der Anteil des anorganischen Bindemittels wird so gewählt, dass einerseits eine ausreichende Festigkeit erzielt wird, wobei andererseits ein optimales Auflöseverhalten gewährleistet sein muss. Wird zu viel Bindemittel zugesetzt, löst sich der Formimpfling nur schwer auf. Wird andererseits zu wenig Bindemittel zugesetzt, ist seine Festigkeit zu gering. Es hat sich herausgestellt, dass ein Bereich von Bindemittelzusatz zwischen 0,5 bis 9 %, vorzugsweise zwischen 1 bis 7 %, und besonders bevorzugt bei 3 % - alle Angaben jeweils in Gewichtsprozent - zu optimalen Ergebnissen führt.

Als Bindemittel werden Wasserglas, Natrium- und/oder Kaliumsilikat, Kieselsäure und/oder mindestens ein Kieselsäureester verwendet. Diese Bindemittel können jeweils alleine oder in beliebiger Kombination miteinander eingesetzt werden.

Alle Parameter, also vor allem die Zusammensetzung des Impfmittelpulvers, dessen Körnung, die Beimengung von Zusätzen, die Art und der Anteil des Bindemittels, sowie die Pressbedingungen, insbesondere der Pressdruck, müssen und können auf den konkreten Anwendungsfall und die von der Gießerei definierten Vorgaben eingestellt werden. Hierbei ist bei dem erfindungsgemäßen Verfahren eine enorme Flexibilität gegeben, weil es einfach und wirtschaftlich ist, flexibel angepasst werden kann, und nicht auf spezielle Zusammensetzungen beschränkt ist.

Die resultierenden Formimpflinge sind kalthärtend, das heißt, dass sie zum weiteren Aushärten nicht erwärmt werden müssen.

Insbesondere ist die Pressung in einer doppelseitig wirkenden Presse zur Initialisierung der Kondensationsreaktion und insbesondere zum Bewirken einer ausreichenden und homogenen Festigkeit geeignet, wobei unter den Pressbedingungen, insbesondere der erzielten Temperatur, das bei der Kondensationsreaktion abgespaltene Produkt in ausreichendem Maße verdampft, so dass sich eine zusätzliche Trocknung des Formimpflings in einem Ofen erübrigt. Dies ist insbesondere dann der Fall, wenn ein Kieselsäureester als Bindemittel verwendet wird, so dass ein Alkohol abgespalten wird, der schon bei geringerer Temperatur rasch verdampft. Ein optimales Ergebnis wird also bevorzugt dann erzielt, wenn eine doppelseitig wirkende Presse mit mindestens einem Kieselsäureester als Bindemittel kombiniert wird. Wird außerdem Ferrosilizium als Trägermaterial für das Impfmittelpulver verwendet, führt dies zu einer äußerst gleichmäßigen Kompaktierung des Formimpflings, der ein optimales Auflöseverhalten zeigt.

Es ist nicht nötig, dem zu verpressenden Pulver einen Katalysator zuzugeben, weil bereits die in der Presse herrschenden Bedingungen ausreichen, um die Kondensationsreaktion zu bewirken. Insbesondere ist es auch nicht nötig, dem Pulver Natriumhydroxid zum Starten der Kondensationsreaktion zuzugeben, weil die in der Presse herrschenden Bedingungen hierzu ausreichen. Gleichwohl ist es möglich, einen Katalysator zuzugeben, der die Geschwindigkeit der Kondensationsreaktion beschleunigt.

Damit zeigt sich, dass mit dem erfindungsgemäßen Verfahren auf wirtschaftliche und einfache Weise ein erfindungsgemäßer Formimpfling herstellbar ist, der ein optimales Auflöseverhalten bei zugleich in enormen Grenzen flexibler Zusammensetzung mit außerordentlich guter Impfwirkung zeigt.

## Patentansprüche

1. Verfahren zur Herstellung eines Formimpflings mit den folgenden Schritten:
- Mischen eines Impfmittelpulvers,
**gekennzeichnet durch**
- eine Zugabe von Wasserglas oder einem Kieselsäureester als Bindemittel von 0,5 - 9 Gew%,
- ein Pressen des Formimpflings umfassend das Impfmittelpulver in einer doppelseitig wirkenden Presse umfassend zwei Presstempel, die sich beim Pressen aufeinander zu bewegen, mit einem spezifischen Druck von 50 bis 500 N/mm² für 2 bis 3 Sekunden, sowie
eine ofenfreie Trocknung des Formimpflings durch eine Presstrocknung.

2. Verfahren nach einem der vorhergehenden Ansprüche, **dadurch gekennzeichnet, dass** als Bindemittel Natrium- und/oder Kaliumsilikat verwendet wird.

3. Verfahren nach einem der vorhergehenden Ansprüche, **dadurch gekennzeichnet, dass** 1 bis 7 Gew %, besonders bevorzugt 3 Gew % Bindemittel zu dem Impfmittelpulver zugegeben werden.

4. Verfahren nach einem der vorhergehenden Ansprüche, **dadurch gekennzeichnet, dass** das Impfmittelpulver Ferrosilizium umfasst.

5. Verfahren nach einem der vorhergehenden Ansprüche, **dadurch gekennzeichnet, dass** das Impfmittelpulver mindestens eine Beimengung aus der Gruppe von Kalzium, Aluminium, Mangan, Zirkonium, Barium, Magnesium, Titan, Aluminium, Lutetium, Cer, Kohlenstoff, insbesondere Graphit, Bismut, Strontium, Schwefel und/oder mindestens einem Seltenerdelement umfasst.

## Claims

1. A method for the production of a molding inoculant with the following steps:
- mixing an inoculant powder,
**characterized by**
- adding 0.5-9% by weight of water glass or a silicic acid ester as a binder,
- pressing the molding inoculant comprising the inoculant powder in a press that acts on both sides and comprises two press punches that move toward each other during pressing with a specific pressure of 50 to 500 N/mm² for 2 to 3 seconds, as well as
- oven-free drying of the molding inoculant by press drying.

2. The method according to one of the preceding claims, **characterized in that** sodium silicate and/or potassium silicate is used as the binder.

3. The method according to one of the preceding claims, **characterized in that** 1 to 7% by weight, particularly preferably 3% by weight, of binder is added to the inoculant powder.

4. The method according to one of the preceding claims, **characterized in that** the inoculant powder comprises ferrosilicon.

5. The method according to one of the preceding claims, **characterized in that** the inoculant powder comprises at least one admixture consisting of the group of calcium, aluminum, manganese, zirconium, barium, magnesium, titanium, aluminum, lutetium, cerium, carbon, in particular graphite, bismuth, strontium, sulfur and/or at least one rare earth element.

## Revendications

1. Procédé de fabrication d'une ébauche de formage d'inoculation comportant les étapes suivantes :
- mélange d'une poudre d'inoculant,
**caractérisé par**
- un ajout de verre soluble ou d'un ester d'acide silicique en tant que liant à hauteur de 0,5 - 9 % en poids,
- une compression de l'ébauche de formage d'inoculation comportant la poudre d'inoculant dans une presse à double effet comportant deux matrices de pressage qui se déplacent l'une vers l'autre lors du pressage avec une pression spécifique de 50 à 500 N/mm² pendant 2 à 3 secondes, ainsi que
un séchage hors four de l'ébauche de formage d'inoculation à l'aide d'un séchage à la presse.

2. Procédé selon l'une quelconque des revendications précédentes, **caractérisé en ce que** l'on utilise en tant que liant du silicate de sodium et/ou du silicate de potassium.

3. Procédé selon l'une quelconque des revendications précédentes, **caractérisé en ce qu'**une quantité de liant de 1 à 7 % en poids, de façon particulièrement préférée 3 % en poids, est ajoutée à la poudre d'inoculant.

4. Procédé selon l'une quelconque des revendications précédentes, **caractérisé en ce que** la poudre d'inoculant comprend du ferrosilicium.

5. Procédé selon l'une quelconque des revendications précédentes, **caractérisé en ce que** la poudre d'inoculant comprend au moins un mélange choisi parmi le groupe se composant de calcium, aluminium, manganèse, zirconium, baryum, magnésium, titane, aluminium, lutétium, cérium, carbone, en particulier graphite, bismuth, strontium, soufre et/ou au moins un élément de terre rare.
